# EUROPEAN PATENT APPLICATION

(11) **EP 2 213 504 A2**
(43) Date of publication of application: **04.08.2010**
(21) Application number: 10152149.0
(22) Date of filing: 29.01.2010
(51) Int. Cl.: B60N 2/06, B60N 2/07, B60N 2/14, B60N 2/42, B60N 2/68, B60R 22/26

(54) **Rotating seat apparatus for vehicle**

(30) Priority: 29.01.2009 JP 2009018732; 29.01.2009 JP 2009018772
(71) Applicant: AISIN SEIKI KABUSHIKI KAISHA, Kariya-shi, Aichi-ken 448-8650 (JP)
(72) Inventor: Yamada, Yukifumi, KARIYA-SHI, AICHI-KEN 448-8650 (JP); Isobe, Shinya, KARIYA-SHI, AICHI-KEN 448-8605 (JP); Goto, Naoki, KARIYA-SHI, AICHI-KEN 448-8605 (JP)
(74) Representative: Intes, Didier Gérard André

(57) **Abstract**

A rotating seat apparatus for a vehicle, includes a lower rail (3), an upper rail (4) provided on the lower rail (3), a rotary plate lower rail (51) supported on the upper rail (4), a rotary plate (5) rotatably supported by the rotary plate lower rail (51), a seat frame supported by the rotary plate (5) and having upper and lower belt anchors, and a detachment preventing mechanism (7) having a first load receiving member (71), and a hook member (77) provided at the rotary plate (5) to be positioned at a rear portion of the seat frame and being engageable with the first load receiving member (71) while allowing the rotary plate (5) to rotate, wherein a detachment load applied to the rotary plate (5) is dispersedly received by the rotary plate lower rail (51) and the first load receiving member (71).

## Description

### TECHNICAL FIELD

This disclosure generally relates to a rotating seat apparatus for a vehicle. More specifically, this disclosure pertains to the rotating seat apparatus for the vehicle having a mechanical strength against a detachment load and a compression load applied to a seat, which is configured to be rotatable and movable.

### BACKGROUND

There exists a passenger automobile, such as an estate car and minivan, having a boot space at a rear portion of the vehicle while being provided with three row seats arranged in parallel to one another in a vehicle front-rear direction so that up to about eight people are to be seated. Furthermore, there exists a passenger automobile, in which a second row seat is configured to be rotatable to face forward or rearward relative to a vehicle traveling direction, so that passengers on the second row and the third row may be seated so as to face to each other when necessary. Moreover, a seat, adapted to the above-mentioned passenger automobile, may be configured also to be movable in the vehicle front-rear direction and a vehicle width direction, in addition to a rotational movement of the seat. Such seat (i.e. a rotating seat) may be adapted to a care vehicle in order to facilitate boarding and alighting of the passenger.

In general, the vehicle seat (not limited to the rotating seat) includes a seat belt for stably holding the passenger. An upper belt anchor, which supports one end portion of the seat belt, and a lower belt anchor, which supports the other end portion of the seat belt, are generally provided at a body frame of the vehicle. However, in a case where the rotating seat is adapted, the upper belt anchor and the lower belt anchor are provided at a rear portion of a seat frame. Therefore, in a case where the vehicle is involved in a crash, the seat belt is pulled forward by a great tensile force because of an inertia generated by the passenger, so that a great load is applied to both of the upper and lower belt anchors. As a result, a moment (a rotating force) is generated at the seat frame of the rotating seat because of the load applied to the upper and lower belt anchors. In other words, a detachment load in an upward direction relative to a vehicle height direction for detaching the rear portion of the seat frame away from a floor and a compression load for compressingly deforming a front portion of the seat frame towards the floor are generated. Therefore, a mechanical strength needs to be ensured at a rotating mechanism or a moving mechanism, which supports the seat frame, against the detachment load and the compression load is crucial in order to obtain safety.

According to a rotating seat for a vehicle disclosed in JPH9-286263A, hook members are attached on the upper and lower belt anchors, respectively, so as to be engageable with each other in order to obtain a seat belt anchor strength with simple structure. More specifically, the rotating portion is rotatably supported at the base portion, which is provided close to a floor. A seat main body is fixedly supported by the rotating portion. Furthermore, a belt anchor fulcrum point is set on the rotating portion. One of the hook members is provided so as to downwardly extend from the rotating portion. The other one of the hook members is provided on the base portion so as to upwardly extend therefrom. The hook members are arranged on the base portion and the rotating portion, respectively, while keeping an allowance therebetween. Furthermore, JPH9-286263A discloses another embodiment in which the base portion is provided on a slider, which is configured so as to be movable along a guide provided closer to the floor. Accordingly, each of the hook members also receives some of the detachment load applied to the seat in the upward direction in order to avoid a detachment of the rotating portion, while not interrupting a rotation of the seat in a normal use.

A belt anchor, which is provided at a seat and which is configured so as to be movable in a vehicle front-rear direction and a vehicle width direction, is disclosed in JP2004-42696A. More specifically, the seat disclosed in JP2004-42696A includes a seat slide, which extends in the front-rear direction and which is configured with a lower rail and an upper rail, and a seat slide, which is provided on the upper rail so as to extend in the vehicle width direction and which is configured with another lower rail and an upper rail. Furthermore, the seat includes a first plate, which is fixed on the upper rail extending in the width direction and on which the belt anchor is attached, and a second plate, which is fixed on the upper rail extending in the front-rear direction. The first and second plates are normally engageable with each other. Accordingly, because the first and the second plates engage with each other, a detachment load applied to the seat in the upward direction is dispersed (i.e. some of the detachment load is applied to an engaged portion between the first and second plates), so that a detachment of the upper rail in the width direction is avoided.

However, even if the rotating seat for the vehicle disclosed in JPH9-286263A is configured so as to receive some of the detachment load by the engagement between the hook members, which are provided at the base portion and the rotating portion, respectively, an engagement point also changes (rotates) in response to the rotation of the seat. Accordingly, because the engagement point is displaced from right above a slider, which supports the base portion, a shearing force is generated at the base portion because of the detachment load acting on the engagement point in the upward direction. As a result, the rotating seat for the vehicle disclosed in JPH9-286263A may not ensure a sufficient mechanical strength. Therefore, in order to ensure a strength against the shearing force, the base portion may need to be formed with a thick member, which may result in increasing a thickness of the rotating seat and manufacturing costs. Furthermore, the detachment load also acts on the slider so as to detach the slider from a guide. However, the hook members do not have a function of preventing the slide from being detached from the guide.

On the other hand, according to the seat disclosed in JP2004-42696A, the upper rail extending in the width direction may be prevented from being detached because of the engagement between the first and second plates. However, the seat disclosed in JP2004-42696A is not adaptable as a detachment prevention of a rotating seat. Furthermore, the seat disclosed in JP2004-42696A includes two detachment preventing means at the respective rotating mechanism and the moving mechanism, which may result in complicating the configuration of the seat and increasing thickness, weight of the seat and manufacturing costs.

Furthermore, both the rotating seat for the vehicle disclosed in JPH9-286263A and the seat disclosed in JP2004-42696A are intended to enhance a resistance against the detachment load, but are not intended to enhance a resistance against a compression load applied to a front portion of the seat.

A need thus exists to provide a rotating seat apparatus for a vehicle having a mechanical strength against a detachment load and a compression load applied to a seat, which has a rotating mechanism and a moving mechanism. Furthermore, a need thus exists to provide the rotating seat apparatus for the vehicle having a detachment preventing mechanism and a compression-deformation preventing mechanism, which are adapted to both of the rotating mechanism and the moving mechanism, with simple configuration and relatively low manufacturing costs.

### SUMMARY

According to an aspect of this disclosure, a rotating seat apparatus for a vehicle, includes a lower rail arranged closer to a vehicle floor and formed in an elongated shape, an upper rail provided on the lower rail so as to be movable in a longitudinal direction of the lower rail, a rotary plate lower rail supported on the upper rail, a rotary plate supported by the rotary plate lower rail so as to be rotatable about a rotational axis thereof, a seat frame supported by the rotary plate and having an upper belt anchor for supporting a first end portion of a seat belt and a lower belt anchor for supporting a second end portion of the seat belt, and a detachment preventing mechanism having a first load receiving member, which is provided at the upper rail so as to be orthogonal relative to the upper rail so that a portion of the first load receiving member upwardly extends therefrom, for restricting an upward movement of the upper rail, and a hook member provided at the rotary plate so as to be positioned at a rear portion of the seat frame and being engageable with the first load receiving member while allowing a rotation of the rotary plate, wherein a detachment load applied to the rotary plate from behind of the seat frame in an upward direction is dispersedly received by the rotary plate lower rail and the first load receiving member.

Accordingly, the lower rail and the upper rail configure a movement mechanism. A rotating mechanism is configured by the upper rail and the rotary plate lower rail, which is supported by the upper rail. Accordingly, the seat frame is configured so as to be movable and rotatable by means of the moving mechanism and the rotating mechanism. Furthermore, the detachment preventing mechanism is configured by the first load receiving member, which is provided on the upper rail so as to extend orthogonal therewith, and the hook member, which is provided at the rear portion of the lower surface of rotary plate and with which the first load receiving member is engaged.

Accordingly, in a case where an excessive load is applied to the seat belt, the detachment load in the upward direction for detaching the rear portions of the seat frame and the rotary plate from the rotary plate lower rail supported by the upper rail via the upper belt anchor and the lower belt anchor is generated. In this case, when the rear portion of the rotary plate is about to be partially deformed and detached, the hook member engages with the first load receiving member in order to bear some of the detachment load. On the other hand, according to a known rotating seat apparatus for a vehicle having no hook member or first load receiving member, all of the detachment load needs to be borne by a rotary plate lower rail.

According to the rotating seat apparatus for the vehicle of this disclosure, the detachment load is dispersedly received by the rotary plate lower rail and the first load receiving member. Therefore, a mechanical strength of the rotating seat apparatus for the vehicle according to this disclosure is enhanced when comparing to the known rotating seat apparatus for the vehicle. Furthermore, because the first load receiving member is provided at the upper rail so as to extend orthogonal therewith and so that the portion of the first load receiving member upwardly extends from the upper rail, a load applied point, at which the detachment load is applied, and a load bearing point for bearing the load are arranged so as to be aligned in an up-and-down direction without being offset. As a result, a shearing force may be reduced, which may further result in enhancing the mechanical strength of the rotating seat apparatus for the vehicle according to this disclosure.

According to another aspect of this disclosure, the lower rail includes an elongated hole so as to extend in a longitudinal direction thereof, the first load receiving member, which is provided at the upper rail so as to be orthogonal therewith, downwardly extends so as to be freely inserted into the elongated hole and is engageble with a circumferential end portion of the elongated hole at a lower surface of the upper rail, and the first load receiving member dispersedly receives some of the detachment load applied to the upper rail via the rotary plate.

Accordingly, the lower rail includes the elongated hole. The first load receiving member, which is provided so as to be orthogonal to the upper rail so that the portion of the first load receiving member upwardly extends therefrom, is freely inserted into the elongated hole and is engageable with the circumferential end portion on the lower surface of the lower rail. The detachment load in the upward direction generated at the rotary plate is transmitted to the upper rail so as to act thereon in a direction of detaching the upper rail from the lower rail. When the upper rail is to be upwardly displaced, the first load receiving member engages with the circumferential end portion of the elongated hole at the lower surface of the upper rail, so that the first load receiving member receives some of the detachment load in order to avoid the detachment of the upper rail from the lower rail. In the known rotating seat apparatus for the vehicle, the detachment load is received only by connecting portions between the upper rails and the lower rails. On the other hand, according to the rotating seat apparatus for the vehicle of this disclosure, the detachment load is dispersed, therefore, the mechanical strength of the rotating seat apparatus for the vehicle is enhanced. The first load receiving member is used as the detachment prevention for the rotary plate and the upper rail. Therefore, the rotating seat apparatus for the vehicle having a simple configuration is achievable at lower manufacturing costs. Additionally, in a normal case where the detachment load is not generated, the first load receiving member is not engaged with the elongated hole. Therefore, in the normal case, the first load receiving member does not interrupt a movement of the upper rail.

According to a further aspect of this disclosure, the first load receiving member includes a stepped portion, which is formed integrally with the first load receiving member or separately thereof, so as to be contactable with the circumferential end portion of the elongated hole at an upper surface of the lower rail, and the first load receiving member dispersedly receives some of a compression load applied to the upper rail in a downward direction via the rotary plate.

The first load receiving member includes the stepped portion, which is integrally formed therewith or separately formed thereof. The stepped portion of the first load receiving member is configured so as to be contactable with the circumferential end portion of the elongated hole of the lower rail on the upper surface thereof. The compression load in the downward direction may be generated at the rotary plate. The compression load is transmitted to the upper rail so as to act thereon in a direction of pushing the upper rail towards the lower rail. In a case where the upper rail is about to be downwardly displaced, the stepped portion of the first load receiving member engages with the circumferential end portion of the elongated hole on the upper surface of the lower rail. Accordingly, the first load receiving member receives some of the compression load, thereby avoiding the compression deformation from occurring at the upper rail. In the know rotating seat apparatus for the vehicle, the compression load is received by a wheel or a sliding member for moving an upper rail. However, according to this disclosure, the compression load is dispersed, thereby enhancing the mechanical strength of the rotating seat apparatus for the vehicle. Furthermore, the first load receiving member is used also for avoiding the compression deformation of the rotary plate and the upper rail. Therefore, the rotating seat apparatus for the vehicle having the simple configuration is achievable with less manufacturing costs. Additionally, in a normal case where the compression load is not generated, the first load receiving member is not engaged with the elongated hole, so that the first load receiving member does not interrupt the movement of the upper rail.

According to a further aspect of this disclosure, a pair of the lower rails are arranged in parallel with each other in a front-rear direction of the vehicle so that the longitudinal direction of the pair of the lower rails extends in a vehicle width direction, a pair of the upper rails are arranged in parallel with each other in the front-rear direction so as to extend in the vehicle width direction, the rotary plate and the seat frame are half-rotatable so as to face forward and rearward relative to a vehicle traveling direction, hook members are provided on the rotary plate so as to be positioned at a rear-right portion and a rear-left portion of the seat frame, respectively, and a plurality of the first load receiving members are provided at end portions of the pair of the upper rails, respectively, so that the rotating seat apparatus for the vehicle includes four first load receiving members in total.

Accordingly, the rotating seat apparatus for the vehicle includes the pair of the lower rails, which are arranged in parallel with each other in the front-rear direction so as to extend in the vehicle width direction, and the pair of the upper rails, which are arranged in parallel with each other in the front-rear direction of the vehicle so as to extend in the vehicle width direction. The rotary plate and the seat frame are configured so as to be forwardly half rotatable or rearwardly half rotatable in the vehicle traveling direction. The hook members are provided at the rear-left portion and the rear-right portion of the rotary plate, respectively. Furthermore, the rotating seat apparatus for the vehicle includes four of first load receiving member so that each of four of the first load receiving members is provided at each end portion of each of the pair of the upper rails. Accordingly, in a case where the rotary plate and the seat frame are positioned so as to face forward, the hook members are engaged with the first load receiving members, which are provided at the upper rail positioned in front of the other upper rail, respectively. On the other hand, in a case where the rotary plate and the seat frame are half-turned so as to face rearward, positions of the hook members are engaged with the first load receiving members, which are provided at the other upper rail positioned at a front side in the front-rear direction of the vehicle, respectively. Accordingly, the detachment load is dispersedly received by the hook members and the first load receiving members in any case where the rotary plate and the seat frame are positioned so as to face forward or rearward.

According to a further aspect of this disclosure, the rotating seat apparatus for the vehicle further includes a front-rear slide mechanism for supporting the lower rail so as to be movable in a front-rear direction of the vehicle. The lower rail is arranged so that a longitudinal direction thereof corresponds to a vehicle width direction, and the first load receiving member is positioned above a supported point of the lower rail which is supported by the front-rear slide mechanism.

Accordingly, the rotating seat apparatus for the vehicle includes the front-rear slide mechanism for supporting the lower rail, which is arranged so as to extend in the vehicle width direction, so that the lower rail is movable in the front-rear direction of the vehicle. The first load receiving member is arranged substantially above the supported point of the lower rail, which is supported by the front-rear slide mechanism. The rotating seat apparatus for the vehicle according this disclosure may be adapted to a seat, which is configured so as to be movable in the vehicle width direction and in the front-rear direction of the vehicle, in addition to the rotational movement of the seat. Furthermore, because the first load receiving member is arranged substantially above the supported point of the lower rail, the load applied point, at which the detachment load is applied, and the load bearing point for bearing the load are arranged so as to be aligned without being offset. Accordingly, a bending moment may be reduced, thereby further enhancing the mechanical strength of the rotating seat apparatus for the vehicle.

According to a further aspect of this disclosure, the rotating seat apparatus for the vehicle further includes a second load receiving member, which is provided at the upper rail so as to be orthogonal to the upper rail so that a portion of the second load receiving member upwardly extends therefrom, for restricting a downward movement of the upper rail, and a compression-deformation preventing mechanism provided on a lower surface of the rotary plate so as to be positioned at a front portion of the seat frame so as to center on the rotational axis and being engageable with the second load receiving member while allowing the rotary plate to rotate. The detachment load applied to the rotary plate from behind of the seat frame in the upward direction is dispersedly received by the rotary plate lower rail and the first load receiving member and a compression load applied to the rotary plate from front of the seat frame in a downward direction is dispersedly received by the rotary plate lower rail and the second load receiving member.

Accordingly, the lower rail and the upper rail configure the movement mechanism. The rotating mechanism is configured by the upper rail and the rotary plate lower rail, which is supported by the upper rail. Accordingly, the seat frame is configured so as to be movable and rotatable by means of the moving mechanism and the rotating mechanism. Furthermore, the detachment preventing mechanism is configured by the first load receiving member, which is provided at the upper rail so as to be orthogonal relative to the upper rail so that the portion of the first load receiving member upwardly extends therefrom, and the hook member, which is provided at the rear portion of the lower surface of rotary plate and with which the first load receiving member is engaged. The rotating seat apparatus for the vehicle further includes the compression-deformation preventing mechanism having the second load receiving member, which is provided at the upper rail so as to be orthogonal relative to the upper rail so that a portion of the second load receiving member upwardly extends therefrom, and the backing plate member, which is provided at the front portion of the lower surface of the rotary plate and with which the second load receiving member is engaged.

According to the seat apparatus for the vehicle having the above-described configuration, in a case where the vehicle is involved in a crash, the seat belt is pulled forward with a great tensile force, so that a great load is applied to each of the upper and lower belt anchors. A moment is generated at the seat frame and the rotary plate because of the load applied to each of the upper and lower belt anchors. As a result, the detachment load in the upward direction is generated at the rear portions of the seat frame and the rotary plate and the compression load in the downward direction is generated at the front portions of the seat frame and the rotary plate. In this case, even if the rear portion of the rotary plate is to be partially deformed and detached, the hook member is engaged with the first load receiving member in order to bear some of the detachment load. On the other hand, in the case where the front portion of the rotary plate is to be partially compressed, the backing plate member contacts the second load receiving member in order to bear some of the compression load. In the known rotating seat apparatus for the vehicle having no hook member, the first load receiving member, the backing plate member and the second load receiving member, all of the detachment load and the compression load need to be borne (received) by the rotary plate lower rail.

Accordingly, the detachment load and the compression load are dispersed, so that the mechanical strength of the rotating seat apparatus for the vehicle is further enhanced, therefore, a safety of the rotating seat apparatus for the vehicle is also enhanced when comparing to the known rotating seat apparatus for the vehicle. Furthermore, because the first load receiving member and the second load receiving member are provided at the respective upper rails so that the portions of the first and second load receiving members upwardly extend from the respective upper rails, the load applied points at which the detachment load and the compression load are applied and the load bearing points are arranged so as to be aligned in the up-and-down direction without being offset, so that the shearing force to be generated may be reduced. As a result, the mechanical strength of the rotating seat apparatus may be further enhanced.

According to a further aspect of this disclosure, the first load receiving member and the second load receiving member are formed so as to have the same configuration and are provided at the upper rail so that the portion of each of the first and second load receiving members upwardly extend in order to restrict the upward movement and the downward movement of the upper rail, the hook member and the backing plate member are arranged in a concyclic manner, and positions of the hook member, which is engageable with the first load receiving member or the second load receiving member, and the backing plate member, which is engageable with the first load receiving member or the second load receiving member, are interchanged with each other in response to the rotation of the rotary plate.

Accordingly, the first load receiving member and the second load receiving member are formed to have the same configuration. Furthermore, the hook member and the backing plate member are arranged so as to be concyclic with each other. Accordingly, the positions of the hook member and the backing plate member, which are engaged with the corresponding load receiving members, are interchanged with each other in response to the rotation of the rotary plate. As a result, the rotating seat apparatus for the vehicle having a simple configuration and less components is achievable, thereby reducing manufacturing costs of the rotating seat apparatus for the vehicle.

According to a further aspect of this disclosure, the lower rail includes an elongated hole formed so as to extend in a longitudinal direction, the second load receiving member, which is provided at the upper rail so as to be orthogonal therewith, downwardly extends so as to be freely inserted into the elongated hole, the second load receiving member includes a stepped portion, which is integrally formed therewith of separately formed thereof, so as to be contactable with a circumferential end portion of the elongated hole at an upper surface of the lower rail, and the second load receiving member dispersedly receives some of the compression load applied to the upper rail via the rotary plate.

Accordingly, the lower rail includes the elongated hole. The first load receiving member or the second load receiving member, which is provided at the upper rail so that the portion thereof upwardly extends therefrom and which is freely inserted into the elongated hole, includes the stepped portion, which is integrally formed therewith or separately formed thereof. The stepped portion of first load receiving member or the second load receiving member is contactable with a circumferential end portion of the elongated hole at an upper surface of the upper rail. The compression load generated at the rotary plate in the downward direction is transmitted to the upper rail so as to act thereon in the direction of pushing the upper rail towards the lower rail. In a case where the upper rail is about to be downwardly displaced, the first load receiving member or the second load receiving member is engaged with the circumferential end portion of the elongated hole at the upper surface of the lower rail. Accordingly, the first load receiving member or the second load receiving member receives some of the compression load, thereby avoiding the compression deformation from occurring at the upper rail. In the know rotating seat apparatus for the vehicle, the compression load is received by the wheel or the sliding member for moving the upper rail. However, according to this disclosure, the compression load is dispersed, thereby enhancing the mechanical strength of the rotating seat apparatus for the vehicle. Furthermore, the first load receiving member or the second load receiving member is used also for avoiding the compression deformation of the rotary plate and the upper rail. Therefore, the rotating seat apparatus for the vehicle having the simple configuration is achievable at lower manufacturing costs. Additionally, in the normal case where the compression load is not generated, the first load receiving member or the second load receiving member is not engaged with the elongated hole, so that the first load receiving member or the second load receiving member does not interrupt the movement of the upper rail.

According to a further aspect of this disclosure, a pair of the lower rails are provided in parallel with each other in the front-rear direction of the vehicle so that a longitudinal direction of the pair of the lower rails extend in a vehicle width direction, a pair of the upper rails are provided in parallel with each other in the front-rear direction of the vehicle so as to extend in the vehicle width direction, the rotary plate and the seat frame are half-rotatable so as to face forward and rearward in a vehicle traveling direction, hook members are provided on the rotary plate so as to be positioned at a rear-right portion and a rear-left portion of the seat frame, respectively, backing plate members are provided on the rotary plate so as to be positioned at a front-right portion and a front-left portion of the seat frame, respectively, first load receiving members are provided at both end portions of one of the pair of the upper rails, respectively, and second load receiving members are provided at both end portions of the other one of the pair of the upper rails, respectively.

Accordingly, the rotating seat apparatus for the vehicle includes the pair of the lower rails, which are arranged in parallel with each other in the front-rear direction of the vehicle so as to extend in the vehicle width, and the pair of the upper rails, which are arranged in parallel with each other in the front-rear direction of the vehicle so as to extend in the vehicle width direction. The rotary plate and the seat frame are configured so as to be forwardly half rotatable or rearwardly half rotatable in the vehicle traveling direction. The hook members are provided at the rear-left portion and the rear-right portion of the rotary plate, respectively. The backing plate members are provided at the front-right portion and the front-left portion of the rotary plate, respectively. Furthermore, the rotating seat apparatus for the vehicle includes the plurality of the first load receiving member and the plurality of the second load receiving member so that each of four of the load receiving members in total are provided at the end portions of the pair of the upper rails, respectively. Accordingly, in a case where the rotary plate and the seat frame are positioned so as to face forward, the hook members are engaged with the first load receiving members, which are provided at a rear side relative to the second load receiving members, respectively, and the backing plate members are engaged with the second load receiving members of the upper rail, which is positioned in front of the other upper rail in the front-rear direction, respectively. In a case where the rotary plate and the seat frame are half-turned so as to face rearward, positions of the hook members and the baking members are interchanged with each other. In this case, the hook members are engaged with the second load receiving members, respectively, and the backing plate members are engaged with the first load receiving members, respectively. Accordingly, the detachment load and the compression load are dispersed in any case where the rotary plate and the seat frame are positioned so as to face forward or rearward.

According to a further aspect of this disclosure, the rotating seat apparatus for the vehicle further includes a front-rear slide mechanism for supporting the lower rail so as to be movable in the front-rear direction of the vehicle. The lower rail is arranged so that a longitudinal direction thereof corresponds to the vehicle width direction, and the second load receiving member is provided above a supported point of the lower rail, which is supported by the front-rear slide mechanism.

Accordingly, the rotating seat apparatus for the vehicle includes the front-rear slide mechanism for supporting the lower rail, which is arranged so as to extend in the vehicle width direction, so that the lower rail is movable in the front-rear direction of the vehicle. The first load receiving member and the second load receiving member are arranged substantially above the supported points of the lower rails, which are supported by the front-rear slide mechanism, respectively. The rotating seat apparatus for the vehicle according this disclosure may be adapted to a seat which is configured so as to be movable in the vehicle width direction and in the front-rear direction of the vehicle, in addition to the rotational movement of the seat. Furthermore, because the first load receiving member and the second load receiving member are arranged substantially above the supported points of the lower rails, respectively, the load applied points, at which the detachment load and the compression load are applied, and the load bearing points for bearing the load are arranged so as to be aligned without being offset. Accordingly, the bending moment may be reduced, thereby further enhancing the mechanical strength of the rotating seat apparatus for the vehicle.

According to a further aspect of this disclosure, the hook member and the backing plate member are arranged at radially outer positions relative to the rotary plate lower rail.

Accordingly, the hook member and the backing plate member are arranged at the outer circumferential side relative to the rotary plate lower rail. Therefore, a load for resisting against the moment, which generates the detachment or the compression deformation, may be borne at circumferentially outer positions relative to the rotary plate lower rail. As a result, the mechanical strength of the rotating seat apparatus for the vehicle may be enhanced.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a perspective view illustrating an entire configuration of a rotating seat apparatus for a vehicle according to an embodiment;

Fig. 2 is an exploded perspective view illustrating the rotating seat apparatus for the vehicle except for a seat frame;

Fig. 3 is a plan view illustrating the rotating seat apparatus for the vehicle except for the seat frame;

Fig. 4 is a cross-sectional diagram illustrating a detachment preventing mechanism of the rotating seat apparatus for the vehicle taken along line IV-IV in Fig. 3;

Fig. 5 is a cross-sectional diagram illustrating a compression-deformation preventing mechanism of the rotating seat apparatus for the vehicle taken along line V-V in Fig. 3; and

Fig. 6 is a back side view of the rotating seat apparatus for the vehicle except for the seat frame.

### DETAILED DESCRIPTION

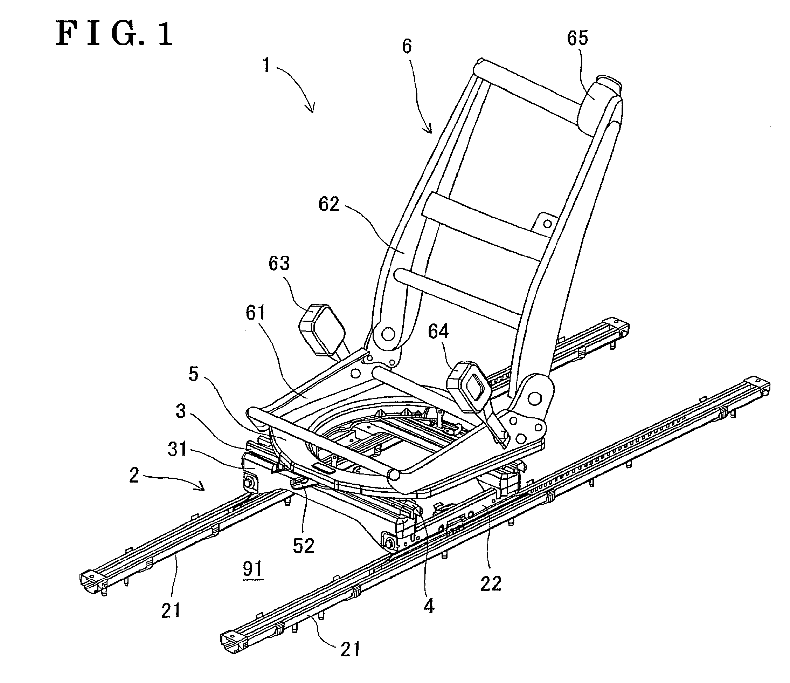

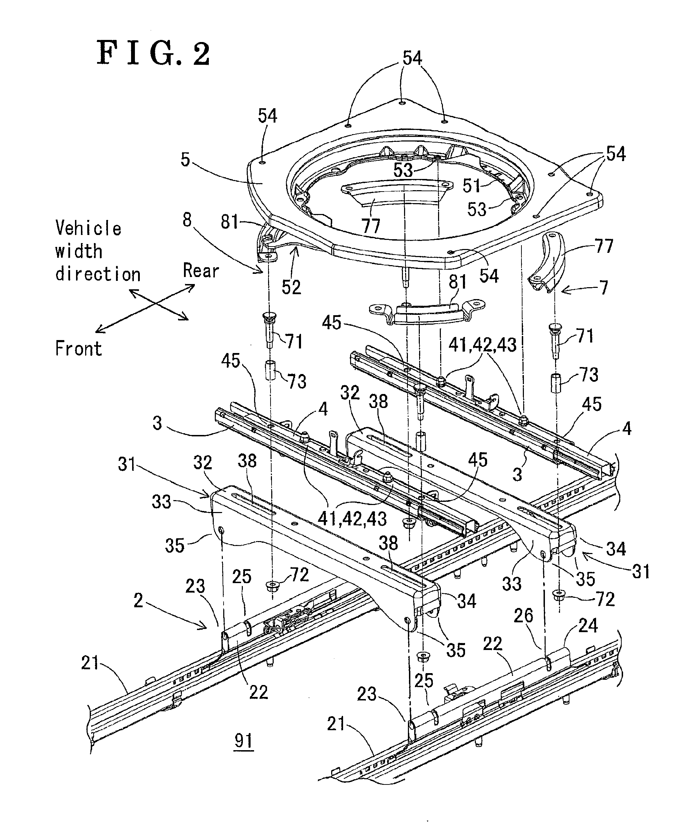

An embodiment of a rotating seat apparatus for a vehicle (which will be hereinafter referred to as a rotating seat apparatus 1) will be described below with reference to Figs. 1 to 6 of the attached drawings. As illustrated in Figs. 1 and 2, the rotating seat apparatus 1 includes a front-rear slide mechanism 2 including a first lower rail 21 and a first upper rail 22, a second lower rail 3 (a lower rail) (in this embodiment two of the second lower rails 3 are included), a second upper rail 4 (an upper rail) (in this embodiment, two of the second upper rails 4 are included), a rotary plate 5, a seat frame 6, a detachment preventing mechanism 7 and a compression-deformation preventing mechanism 8. The second lower rails 3 and the second upper rails 4 configure a moving mechanism.

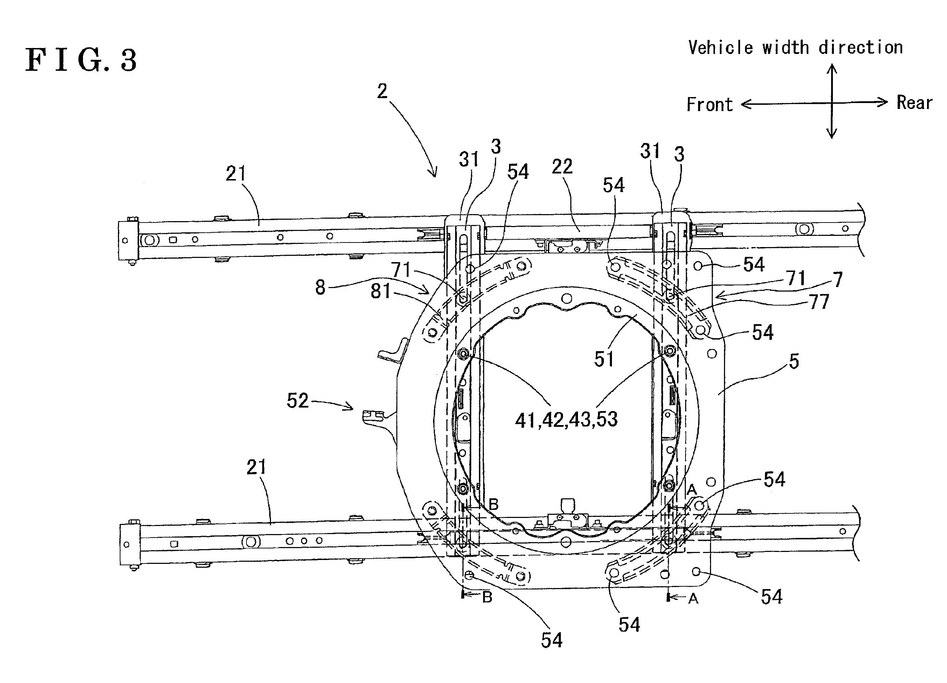

The front-rear slide mechanism 2 is a mechanism for slidably moving the seat frame 6 in a front-rear direction of the vehicle. As illustrated in Figs. 2 and 3, the front-rear slide mechanism 2 includes a pair of first lower rails 21 and a pair of first upper rails 22. The first lower rails 21 are fixed on a vehicle floor 91 and are arranged in parallel with each other in a vehicle width direction so as to extend in the front-rear direction of the vehicle. The first upper rails 22 are movably supported on upper portions of the first lower rails 21, respectively. A slit 25 is formed at the upper portion of each of the first upper rails 22 in the vicinity of a front end portion 23 thereof. Similarly, a slit 26 is formed at the upper portion of each of the first upper rails 22 in the vicinity of a rear end portion 24 thereof.

A pair of attachment brackets 31 are provided to the front-rear slide mechanism 2 so as to connect the pair of the upper rails 22. More specifically, the pair of the attachment brackets 31 are arranged in parallel with each other in the front-rear direction so as to extend in the vehicle width direction, while the pair of the attachment brackets 31 connect the pair of the upper rails 22. Each of the attachment brackets 31 includes a rail carrying portion 32, which is formed in a horizontal manner (i.e. in parallel with the vehicle floor 91), and flange portions 33 and 34 at respective end portions of the attachment bracket 31 in the front-rear direction. The flange portions 33 are obtained by bending a front portion of each of the attachment brackets 31 in the front-rear direction so as to downwardly extend towards the vehicle floor 91. Similarly, the flange portions 34 are obtained by bending a rear portion of each of the attachment brackets 31 in the front-rear direction so as to downwardly extend towards the vehicle floor 91. Additionally, each of the flange portions 33 and each of the flange portions 34 are formed to be in parallel with each other. An end portion of each of the flange portions 33 and 34 serves as an engagement portion 35. The engagement portions 35 of the attachment bracket 31, which is arranged in front of the other attachment bracket 31 in the front-rear direction, are engageably fixed on the front end portions 23 and the slits 25, respectively. More specifically, the engagement portions 35 of the flange portions 33 are engaged with the front end portions 23 of the first upper rails 22, respectively, and the engagement portions 35 of the flange portions 34 are engaged with the slits 25, respectively, so that the attachment bracket 31 is fixed on the first upper rails 22 at the front portion thereof. Similarly, the engagement portions 35 of the other attachment bracket 31, which is arranged behind the attachment bracket 31 in the front-rear direction, are engageably fixed on the rear end portions 24 and the slits 26, respectively. More specifically, the engagement portions 35 of the flange portions 33 are engaged with the slits 26 of the first upper rails 22, respectively, and the engagement portions 35 of the flange portions 34 are engaged with the rear end portions 24, respectively, so that the other attachment bracket 31 is fixed on the first upper rails 22 at the rear portion thereof. Each of the engagement portions 35 serves as a supported point, at which the attachment bracket 31 is supported by the front-rear slide mechanism 2.

Each of the second lower rails 3 is fixed on the rail carrying portion 32 of each of the attachment brackets 31, so that the second lower rails 3 are arranged in parallel with each other in the front-rear direction and so that an elongated direction of the second lower rail 3 corresponds to the vehicle width direction. An elongated hole 37 is formed at each end portion of each of the second lower rails 3 so as to extend along a longitudinal direction thereof. Accordingly, two elongated hole 37 are formed at each of the second lower rails 3, in other words, four elongated hole 37 are formed in total. Additionally, an elongated hole 38 is formed at each end portion of each of the rail carrying portions 32 of each of the attachment brackets 31 so as to correspond to the elongated hole 37. Accordingly, four elongated holes 38 are formed in total.

Each of the second upper rails 4 is provided on an upper portion of each of the second lower rails 3 so as to be movable in the longitudinal direction thereof by means of a sliding portion. Each of the second lower rails 3 is paired with each of the second upper rails 4 as a unit so as to configure a lateral slide mechanism for slidably moving the seat frame 6 in the vehicle width direction (i.e. in the lateral direction). A pin holes 45 is formed at each end portion of each of the second upper rails 4. In other words, four pin holes 45 are formed at the second upper rails 4 in total. Two attachment holes 41 are formed in the vicinity of an intermediate portion of each of the second upper rails 4. In other words, four attachment holes 41 are formed in total. A rotary plate lower rail 51, which is formed in a substantially circular shape, is fixed on upper portions of the respective second upper rails 4, in a manner where bolts 42 are inserted into the respective attachment holes 41. The rotary plate lower rail 51 rotatably supports the rotary plate 5. The second upper rails 4 and the rotary plate lower rail 51 configure a rotating mechanism.

The rotary plate 5 is formed in a substantially annular shape and is supported by the rotary plate lower rail 51 at an opening portion formed in a center portion of the rotary plate 5. An unlocking lever 52 is provided at a front portion of the rotary plate 5 in the front-rear direction. The unlocking lever 52 is configured so as to operate a lock mechanism in order to allow and inhibit a rotation of the rotary plate 5 and so as to lock the rotary plate 5 at any desired rotational position so that the rotating seat faces forward or rearward (i.e. a predetermined forward rotational position or a predetermined rearward rotational position). An attachment hole 54 (in this embodiment, eight attachment holes 54) is provided on the rotary plate 5 in the vicinity of an outer edge portion thereof in a radial direction thereof. The seat frame 6 is fixed on an upper portion of the rotary plate 5 via the attachment holes 54. Accordingly, the rotary plate 5 and the seat frame 6 rotate as a unit. Additionally, in a case where the rotary plate 5 and the seat frame 6 are positioned so as to face forward, front portions of the respective rotary plate 5 and the seat frame 6 face forward in the front-rear direction of the vehicle. On the other hand, in a case where the rotary plate 5 and the seat frame 6 are positioned so as to face rearward, the front portions of the respective rotary plate 5 and the seat frame 6 face rearward in the front-rear direction of the vehicle.

As illustrated in Fig. 1, the seat frame 6 includes a seat cushion frame 61, which is fixed on the rotary plate 5, and a seat back frame 62, which is rotatably supported by the seat cushion frame 61 at a rear end portion thereof. Lower belt anchors 63 and 64 are fixed on the seat cushion frame 61 at a rear-right portion and a rear-left portion thereof, respectively. An upper belt anchor 65 is fixed on the seat back frame 62 at an upper left portion thereof (i.e. at a near right side of an upper portion of the seat back frame on a paper surface in Fig. 1). A waist belt is arranged so as to extend between the lower belt anchors 63 and 64. A shoulder belt is arranged so as to extend between, for example, the lower belt anchor 63 and the upper belt anchor 65 while allowing the shoulder belt to be pullable, in order to stably support a passenger.

The rotating seat apparatus 1 according to the embodiment further includes the detachment preventing mechanism 7 for avoiding a detachment of the rotary plate 5 from the second upper rails 4 and a detachment of the second upper rails 4 from the second lower rails 3, and the compression-deformation preventing mechanism 8 for avoiding a compression-deformation of the rotary plate 5 and the second upper rails 4.

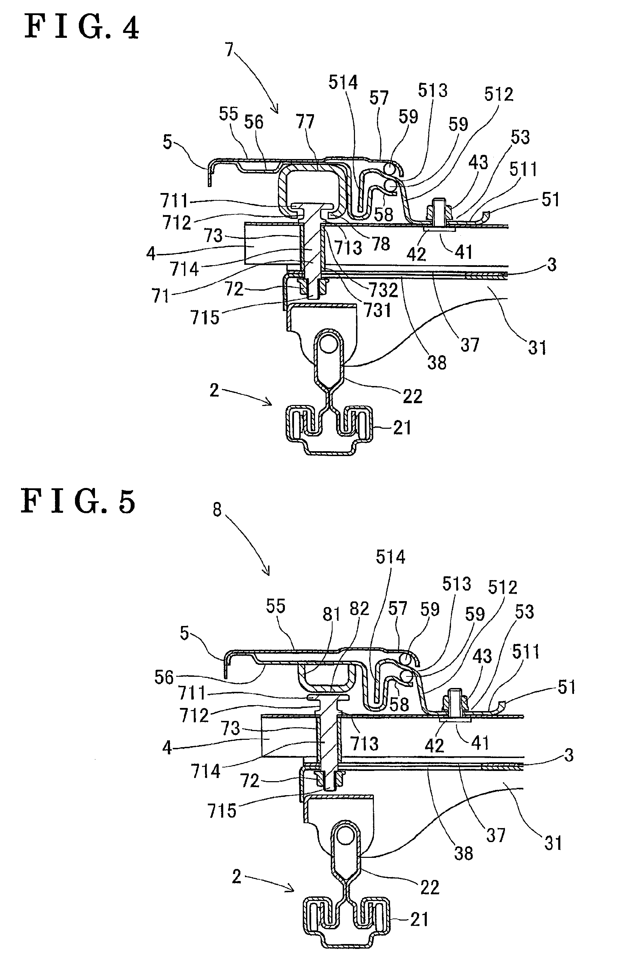

A detailed explanation of the second upper rails 4 supporting the rotary plate 5 will be given below with reference to Figs. 4 and 5. The rotary plate lower rail 51, which is formed in the substantially annular shape, is concentrically bent, so that the rotary plate lower rail 51 includes a bottom wall portion 511, which is formed to be flat, a side wall portion 512, which is obtained by upwardly bending a radially outer end portion of the bottom wall portion 511, an upper wall portion 513, which is obtained by upwardly and outwardly bending a radially outer end portion of the side wall portion 512, and a flange wall portion 514, which is obtained by downwardly bending a radially outer end portion of the upper wall portion 513, in this order from an inner circumferential side towards an outer circumferential side of the rotary plate lower rail 51. Attachment holes 53 are formed on the bottom wall portion 511 of the rotary plate lower rail 51 at positions corresponding to the attachment holes 41 of the second upper rails 4. A bolt 42 is upwardly inserted into and penetrates each of the attachment holes 54 of the second upper rail 4 and each of the attachment hole 53 of the rotary plate lower rail 51. Then, a nut 43 is screwed onto an end portion of the bolt 42 from an upper side thereof. As a result, the rotary plate lower rail 51 and the second upper rails 4 are fixed to each other by means of the bolts 42 and the nuts 43.

The rotary plate 5 is configured with a first rotary plate upper rail 55 and a second rotary plate upper rail 56, each of which is formed in a substantially annular shape. The first rotary upper rail 55 is placed on the second rotary plate upper rail 56, and an outer circumferential end portion of the first rotary plate upper rail 55 and an outer circumferential end portion of the second rotary plate upper rail 56 are pressed with each other so as to closely and fittedly contact with each other. An inner circumferential portion of the first rotary plate upper rail 55 serves as a first sliding portion 57. Furthermore, the first sliding portion 57 is arranged at a position above the upper wall portion 513 of the rotary plate lower rail 51. The inner circumferential portion of the second rotary plate upper rail 56 is concentrically bent. More specifically, the inner circumferential portion of the second rotary plate upper rail 56 is downwardly bent, upwardly curved, and then radially inwardly bent, in this order towards an inner circumferential end portion of the second rotary upper rail 56. The bent portion positioned at the inner most in a radial direction of the second rotary upper rail 56 serves as a second sliding portion 58. Furthermore, the second sliding portion 58 is arranged so as to be positioned below the upper wall portion 513 of the rotary plate lower rail 51. A rolling member 59 is disposed between the first sliding portion 57 and the upper wall portion 513. Similarly, the rolling member 59 is disposed between the upper wall portion 513 and the second sliding portion 58. Accordingly, the rotary plate 5 is configured to be rotatable.

As illustrated in Figs. 2 and 3, the detachment preventing mechanism 7 includes load receiving pins 71, which are inserted into the respective pin holes 45 so that a portion of each of the load receiving pins 71 upwardly extends from each of the pin holes 45, and two hook members 77, which are provided at rear left and rear right portions of a lower surface of the rotary plate 5, respectively. The load receiving pins 71 serve as first load receiving members and as second receiving members. The load receiving pins 71 (i.e. the first load receiving members) are used for the detachment preventing mechanism 7. Furthermore, the load receiving pins 71 (i.e. the second load receiving members) are used for the compression-deformation mechanism 8. As illustrated in Figs. 4 and 5, each of the load receiving pins 71 includes a pin head portion 711, a pin neck portion 712, a contacting portion 713, an elongated shaft portion 714 and a lower end external thread portion 715 in this order from top to bottom. A diameter of the pin head portion 711 is set to be greater than a diameter of other parts of the load receiving pins 71. A diameter of the pin neck portion 712 is set to be smaller than the diameter of the pin head portion 711. A diameter of the contacting portion 713 is set to be greater than the diameter of the pin neck portion 712. Then, a diameter of the elongated shaft portion 714 is again set to be smaller than the diameter of the contacting portion 713. A diameter of the lower end external thread portion 715, on which an external thread is formed, is set to be smaller than the diameter of the elongated shaft portion 714. Each of the load receiving pins 71 is downwardly inserted into each of the pin holes 45 from above until the contacting portion 713 contacts an upper surface of each of the second upper rails 4. Accordingly, each of the load receiving pins 71 is avoided from being largely downwardly displaced.

The shaft portion 714 of each of the load receiving pins 71 penetrates the corresponding second upper rail 4. Then, the shaft portion 714 of each of the load receiving pins 71 is freely inserted into the corresponding elongated hole 37 of the second lower rail 3 and the corresponding elongated hole 38 of the attachment bracket 31. A flanged nut 72 is screwed on the lower end external thread portion 715 of each of the load receiving pins 71 from a bottom end portion of the lower end external thread portion 715. Each of the flanged nuts 72 is formed so as to be contactable with a circumferential end portion defining the elongated hole 38 at a lower surface of the corresponding attachment bracket 31. In other words, each of the flanged nuts 72 is positioned so as to normally form a slight clearance relative to the circumferential end portion of the elongated hole 38 at the lower surface of the corresponding attachment bracket 31, so that the flanged nut 72 does not interrupt a movement of the corresponding second upper rail 4. In a case where a detachment load in an upward direction is applied to each of the load receiving pins 71, the load receiving pin 71 is slightly moved in the upward direction by the clearance formed between the flanged nut 72 and the circumferential end portion of the elongated hole 38 (i.e. the clearance formed between the flanged nut 72 and the circumferential edge portion of the elongated hole 38 is closed), thereby restricting an upward movement of the load receiving pin 71. Furthermore, a cylinder-shaped collar 73 (i.e. a stepped portion), which is prepared separately of the load receiving pin 71, is fitted onto an outer circumferential surface of the shaft portion 714 of each of the load receiving pins 71. A lower end surface 731 of the collar 73 contacts a circumferential end portion of the elongated hole 37 at the upper surface of the corresponding second lower rail 3. On the other hand, an upper end surface 732 of the collar 73 is formed to be contactable with the corresponding upper rail 4. In this embodiment, the collars 73 are formed separately of the load receiving pins 71. However, the collars 73 may be integrally formed on the respective load receiving pins 71 so as to form stepped portions.

As illustrated in Figs. 2 and 3, each of the hook members 77 is formed in an arc shape centering on a rotational axis of the rotary plate 5. As illustrated in Fig. 4, the hook members 77 are fixed on a lower surface of the second rotary upper rail 56. Each of the hook members 77 is formed to open. More specifically, as illustrated in Fig. 4, each of the hook members 77 is arranged so that an opening portion is positioned at a lower portion of each of the hook members 77 so as to downwardly open. Lower end portions of the hook member 77, which serve as pull-up portions 78, are inwardly bent in a radial direction of the hook member 77, so that a length of the opening portion in a radial direction of the hook member 77 is narrowed when comparing to a length of the hook member 77 in the radial direction thereof. The pull-up portions 78 of each of the hook members 77 are engageable with the pin neck portion 712 of the corresponding load receiving pin 71 (i.e. the pull-up portions 78 of each of the hook members 77 are engaged within an annular recessed portion (i.e. an annular groove portion) formed between the pin head portion 711 and the contacting portion 713) while normally forming a slight clearance between the pull-up portions 78 and the corresponding pin neck portion 712, so that the hook member 77 does not interrupt a rotational movement of the rotary plate 5. In a case where the detachment load in the upward direction is applied to each of the hook members 77, the hook member 77 is upwardly displaced by the clearance formed between the pull-up portions 78 and the corresponding pin neck portion 712 (i.e. the clearance formed between the pull-up portions 78 and the corresponding pin neck portion 712 is closed). Accordingly, the pull-up portions 78 of each of the hook members 77 engageably contact the pin head portion 711 of the corresponding load receiving pin 71 so as to pull up the load receiving pin 71.

As illustrated in Figs. 2 and 3, the compression-deformation preventing mechanism 8 includes the load receiving pins 71, two backing plate members 81, which are provided at the front right and front left portions on the lower surface of the rotary plate 5 respectively, and the like. The load receiving pins 71, the flanged nuts 72 and the collars 73 are explained in detail above, therefore, the explanation about the load receiving pins 71, the flanged nuts 72 and the collars 73 are omitted here.

As illustrated in Figs. 2 and 3, each of the backing plate members 81 is formed in an arc shape centering on the rotational axis of the rotary plate 5 in a concycle manner relative to the hook members 77. As illustrated in Fig. 5, the backing plate members 81 are fixed on a lower surface of the second rotary plate upper rail 55. Each of the backing plate members 81 is formed to open. More specifically, as illustrated in Fig. 5, each of the backing plate member 81 is arranged so that an opening portion is formed at an upper portion of each of the backing plate members 81 and so as to upwardly open. A lower surface of a flat portion of each of the backing plate members 81 positioned opposite from the opening portion serves as a contacting surface 82. Each of the backing plate members 81 is arranged so that a slight clearance is normally formed between the contacting surface 82 thereof and an upper surface of the corresponding pin heard portion 711 in order not to interrupt the rotational movement of the rotary plate 5. In a case where a compression load in a downward direction is applied to each of the backing plate members 81, the backing plate member 81 is downwardly displaced by the clearance formed between the contacting surface 82 and the upper surface of the pin head portion 711 (i.e. the clearance formed between the contacting surface 82 and the upper surface of the pin head portion 711 is closed), so that the contact surface 82 contacts the pin head portion 711 of the corresponding load receiving pin 71.

An operation of the rotating seat apparatus 1 having the above-described configuration will be described below. When the first upper rails 22 of the front-rear slide mechanism 2 are slidably moved on the corresponding first lower rails 21 in the front-rear direction of the vehicle, the second lower rails 3, the second upper rails 4, the rotary plate 5 and the seat frame 6 are also moved in the front-rear direction. When the second upper rails 4 are moved on the corresponding second lower rails 3 in the vehicle width direction, the rotary plate 5 and the seat frame 6 are integrally moved together in the vehicle width direction in response to the movement of the second upper rails 4.

In a case where the unlocking lever 52 is operated in order to cancel a lock state of the lock mechanism, the rotary plate 5 and the seat frame 6 are allowed to integrally rotate relative to the second upper rails 4. When the rotary plate 5 and the seat frame 6 reach the predetermined forward rotational position or the rearward rotational position, the lock mechanism is actuated, so that a further rotation of the rotary plate 5 and the seat frame 6 is locked (restricted). More specifically, in a case where the rotary plate 5 and the seat frame 6 reach the predetermined forward rotational position, the hook members 77, which are provided at the rear portion of the rotary plate 5, engage with the corresponding load receiving pins 71, which are provided at the second upper rail 4 positioned at the rear side relative to the other second upper rail 4 in the front-rear direction of the vehicle, and the backing plate members 81, which are provided at the front portion of the rotary plate 5, engage with the corresponding load receiving pins 71, which are provided at the second upper rail 4 positioned at the front side. On the other hand, in a case where the rotary plate 5 and the seat frame 6 reach the predetermined rearward rotational position, the positions of the hook members 77 and the backing plate members 81 are interchanged with each other. More specifically, in this case, the hook members 77 engage with the corresponding load receiving pins 71, which are provided at the second upper rail 4 positioned in the front side, and the backing plate members 81 engage with the corresponding load receiving pins 71, which are provided at the second upper rail 4 positioned at the rear side relative to the other second upper rail 4.

A case where a front portion of the vehicle collides while traveling forward in a condition where the rotary plate 5 and the seat frame 6 are positioned so as to face forward and the occupant seated on the seat cushion, which is provided on the seat frame 6, is supported by the waist belt and the shoulder belt, will be described below. In this case, a vehicle speed is impulsively (dramatically, rapidly) reduced, which results in pulling the waist belt and the shoulder belt with a great impulsive load generated in the forward direction because of an inertia generated by the occupant. The impulsive load is intensively applied to each of the belt anchors 63, 64 and 65. Each of the belt anchors 63, 64 and 65 is provided at the rear portion of the seat frame 6. Accordingly, the impulsive load acts on each of the belt anchors 63, 64 and 65 as a moment (a rotational force) for rotating the rotary plate 5 and the seat frame 6. More specifically, the detachment load in the upward direction for detaching (displacing) the rear portion of the seat frame 6 away from the floor 91 and the compression load for compressingly deforming the front portion of the seat frame 6 towards the floor 91 are generated. Specifically, the impulsive load applied to the upper belt anchor 65 is likely to act as a great moment, because the upper belt anchor 65 is positioned away from the rotary plate 5. Therefore, a great detachment load and a great compression load are likely to be generated.

In a case where the rear portion of the rotary plate 5, to which the detachment load is applied, is about to be partially deformed so as to detach (be displaced) from the floor 91, the hook members 77 are upwardly displaced, so that the hook members 77 engageably contact the pin head portions 711 of the load receiving pins 71, respectively, and the load receiving pins 71 are pulled up by the corresponding hook members 77. The load receiving pins 71, which are pulled up by the corresponding hook members 77, receive some of the detachment load in a manner where each of the flanged nuts 72 screwed on the respective lower end external thread portions 715 engageably contacts the circumferential end portion of each of the elongated holes 38 at the lower surface of the corresponding bracket 31. On the other hand, in a case where the front portion of the rotary plate 5, to which the compression force is applied, is about to be partially compressingly deformed, the backing plate members 81 are downwardly displaced until the backing plate members 81 contact the corresponding load receiving pins 71. Accordingly, the load receiving pins 71, which are to be downwardly displaced, receive some of the compression load in a manner where the contacting portions 713 of the respective load receiving pins 71 press-fittingly contact the upper surface of the second upper rail 4. Accordingly, the detachment load and the compression load, which apply to the rotary plate 5, are decentrally received instead of the rotary plate 5 receiving all of the detachment load and the compression load. Accordingly, a mechanical strength of the rotating seat apparatus 1 of this embodiment is enhanced, which may further enhance a safety of the rotating seat apparatus 1 when comparing to a known rotating seat apparatus 1. Additionally, because the load receiving pins 71 are provided at the corresponding second upper rails 4 so as to be orthogonal therewith and so that portions of the respective load receiving pins 71 are upwardly extend from the corresponding second upper rails 4, load applying points at which the detachment load and the compression load are applied are located without being offset in a up-and-down directions relative to load bearing points for bearing the detachment load and the compression load. Accordingly, a shearing force is reduced, thereby further enhancing the mechanical strength of the rotating seat apparatus 1.

Furthermore, because the hook members 77 and the backing plate members 81 are arranged at a radially outer side relative to the rotary plate lower rail 51, a load for resisting against the moment that generates the detachment or the compression deformation (i.e. the detachment load or the compression load) may be borne by the load receiving pins 71, which are arranged at the radially outer side relative to the rotary plate lower rail 51. Accordingly, the mechanical strength of the rotating seat apparatus 1 of the embodiment may be enhanced, so that the rotary plate 5 may not be easily deformed.

Some of the detachment load applied to the second upper rails 4 via the rotary plate 5 are dispersedly received by the flanged nuts 72 in the manner where some of the detachment load upwardly move the load receiving pins 71 (i.e. the contacting portion 713 of the respective load receiving pins 71). Accordingly, the detachment load applied to connected portions between the second lower rail 2 and the second upper rail 4, which are arranged at the rear side relative to the other second lower rail and the other second upper rail in the front-rear direction, relatively, may be reduced. As a result, the second upper rail 4 may be avoided from being detached from the corresponding second lower rail 3. Furthermore, some of the compression load applied to the second upper rails 4 via the rotary plate 5 are dispersedly received by the collars 73 of the respective load receiving pins 71. Accordingly, the compression load applied to the sliding portions of the second lower rail 3 and the second upper rail 4, which are positioned in the front side, may be reduced. As a result, the compression deformation may be avoided from occurring at the sliding member and the like.

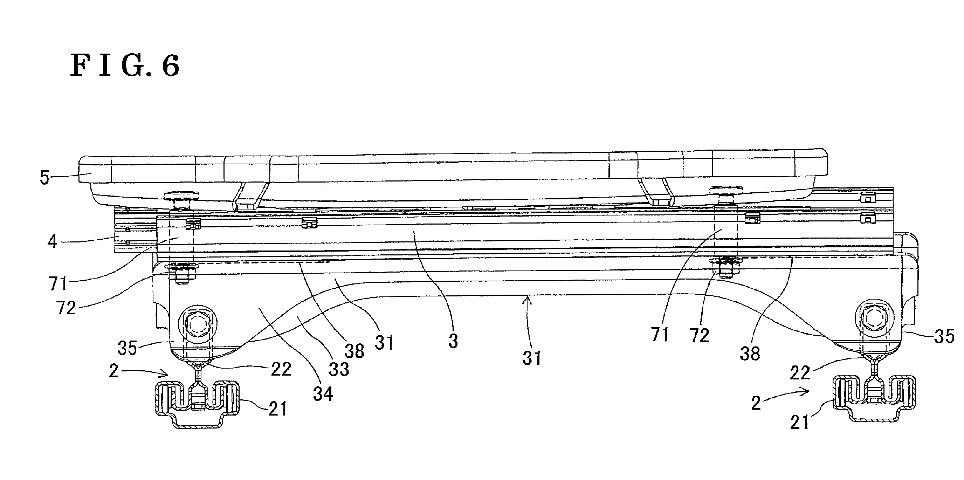

As illustrated in Fig. 6, each of the load receiving pins 71 is arranged substantially above the engagement portions 35 of the corresponding attachment bracket 41, which is supported by the front-rear slide mechanism 2. Illustrated in Fig. 6 is a back side view of the rotating seat apparatus 1 for the vehicle except for the seat frame. Furthermore, illustrated in Fig. 6 is a state where the second upper rails 4 are moved at the left-most position in Fig. 6. The engagement portions 35 of each of the attachment brackets 31 are arranged above the corresponding first upper rail 22 of the front-rear slide mechanism 2. Furthermore, in the state illustrated in Fig. 6, the load receiving pins 71 positioned at the left side in Fig. 6 are located substantially immediately above the engagement portions 35 positioned at the left side. When the second upper rails 4 are moved to the right in Fig. 6, the load receiving pins 71 are also moved to the right within the corresponding elongated holes 37 of the corresponding lower rails 3 and the corresponding elongated holes 38 of the corresponding attachment bracket 31. Accordingly, the load receiving pins 71 positioned at the right side in Fig. 6 are located substantially immediately above the engagement portions 35 of the corresponding attachment bracket 31. In a case where the second upper rails 4 are moved at an intermediate position on the front-rear slide mechanism 2 in the front-rear direction of the vehicle, each of the load receiving pins 71 is located obliquely above the corresponding engagement portion 35 so as to be positioned closer to the intermediate portion of the front-rear slide mechanism 2. Accordingly, the load applying points, at which the detachment load or the compression load is applied, and the load bearing points for bearing the detachment load or the compression load are set so as to be aligned in the up and down direction without being offset. As a result, a bending moment may be reduced, which may result in further enhancing the mechanical strength of the rotating seat apparatus 1.

A case where the vehicle is hit from behind at the rear portion thereof in a condition where the rotating plate 5 and the seat frame 6 are positioned so as to face forward and where the occupant is supported by the seat belt will be described below. In this case, the vehicle speed is implusively (grammatically, rapidly) increased and the occupant is pushed back to the seat back because of the inertia of the occupant. The impulsive load is received by the entire seat frame 6, therefore a notable great load is not likely to be generated at each of the belt anchors 63, 6 64 and 65. Therefore, the moment (i.e. the detachment load or the compression load) generated at the rotary plate 5 becomes relatively small when comparing to the case where the vehicle collides from the front portion thereof. In the above-described crash case, the compression load is applied to the rear portions of the rotary plate 5 and the seat frame 6 and the detachment load is applied to the front portions of the rotary plate 5 and the seat frame 6. In this case, the load is not dispersedly received by the load receiving pins 71 (i.e. the load receiving pints 71 do not excise its function as load receivers). However, the rotating seat apparatus 1 has sufficient mechanical strength so as to endure the moment (i.e. the compression load or the detachment load), which is relatively small.

A case where the vehicle is involved in the crash while the rotary plate 5 and the seat frame 6 are positioned so as to face rearward will be described below. In this case, it is conceivable that the entire rotating seat apparatus 1 is arranged back to front relative to the vehicle. Therefore, the load receiving pins 71 exercise its function as the load receivers.

Accordingly, the detachment load and the compression load are dispersed in the case where an accident that generates the impulsive load generated in a direction of pulling forward the seat belt occurs, without being influenced on the position of the rotary plate 5 and the seat frame 6 (i.e. without being influenced by whether the rotary plate 5 and the seat frame 6 are positioned forward or rearward). As a result, the safety of the rotating seat apparatus 1 may be enhanced. More specifically, the detachment load may be dispersedly received by the load receiving pins 71 and the hook members 77, thereby enhancing the mechanical strength of the rotating seat apparatus 1. On the other hand, the compression load may be dispersedly received by the load receiving pins 71 and the backing plate members 81, thereby enhancing the mechanical strength against the compression load.

Furthermore, because each of the hook members 77 and the backing plate members 81 is formed in the arc shape, an engagement between the hook members 77 and the backing plate members 81 on the one hand and the corresponding load receiving pins 71 on the other is maintained even if an error occurs at the rotational position of the rotary plate 5, so that the above-mentioned function as the load receiver may be appropriately exercised. Additionally, a length of each of the hook members 77 and the backing plate members 81 in a circumferential direction thereof is not limited to the above-described embodiment. In other words, each of the hook member 77 and the backing plate members 81 may be modified so as to have any desired length along the circumferential direction thereof. Furthermore, a number of hook members 77 and the backing plate members 81 are not limited to the above-described embodiment. For example, two hook members 77 may be connected to form a single hook member. Similarly, two backing plate members 81 may be connected to form a single backing plate member.

Furthermore, the hook members 77 and the backing plate members 81 are arranged in the concycle manner. Additionally, the load receiving pins 71, all of which have the same configuration, are used. Therefore, the rotating seat apparatus 1 having a simple configuration and having less components may be achieved, which may result in reducing manufacturing costs. Additionally, the rotating seat apparatus 1 is not limited to the above-described embodiment. For example, the hook member and the backing plate member may be formed so that the hook member has a different diameter from the backing plate member. In this case, a load arrester pin and a load receiving pin may be separately formed.

## Claims

1. A rotating seat apparatus (1) for a vehicle, **characterized in that** it comprises:
a lower rail (3) arranged closer to a vehicle floor (91) and formed in an elongated shape;
an upper rail (4) provided on the lower rail (3) so as to be movable in a longitudinal direction of the lower rail (3);
a rotary plate lower rail (51) supported on the upper rail (4);
a rotary plate (5) supported by the rotary plate lower rail (51) so as to be rotatable about a rotational axis thereof;
a seat frame (6) supported by the rotary plate (5) and having an upper belt anchor (65) for supporting a first end portion of a seat belt and a lower belt anchor (63, 64) for supporting a second end portion of the seat belt; and
a detachment preventing mechanism (7) having a first load receiving member (71), which is provided at the upper rail (4) so as to be orthogonal relative to the upper rail (4) so that a portion of the first load receiving member (71) upwardly extends therefrom, for restricting an upward movement of the upper rail (4), and a hook member (77) provided at the rotary plate (5) so as to be positioned at a rear portion of the seat frame (6) and being engageable with the first load receiving member (71) while allowing a rotation of the rotary plate (5), wherein
a detachment load applied to the rotary plate (5) from behind of the seat frame (6) in an upward direction is dispersedly received by the rotary plate lower rail (51) and the first load receiving member (71).

2. The rotating seat apparatus (1) for the vehicle according to Claim 1, wherein the lower rail (3) includes an elongated hole (37) so as to extend in a longitudinal direction thereof, the first load receiving member (71), which is provided at the upper rail (3) so as to be orthogonal therewith, downwardly extends so as to be freely inserted into the elongated hole (37) and is engageble with a circumferential end portion of the elongated hole (37) at a lower surface of the upper rail (3), and the first load receiving member (71) dispersedly receives some of the detachment load applied to the upper rail (4) via the rotary plate (5).

3. The rotating seat apparatus (1) for the vehicle according to Claim 2, wherein the first load receiving member (71) includes a stepped portion (73), which is formed integrally with the first load receiving member (71) or separately thereof, so as to be contactable with the circumferential end portion of the elongated hole (37) at an upper surface of the lower rail (3), and the first load receiving member (71) dispersedly receives some of a compression load applied to the upper rail in a downward direction via the rotary plate (5).

4. The rotating seat apparatus (1) for the vehicle according to any one of Claims 1 to 3, wherein a pair of the lower rails (3) are arranged in parallel with each other in a front-rear direction of the vehicle so that the longitudinal direction of the pair of the lower rails (3) extends in a vehicle width direction, a pair of the upper rails (4) are arranged in parallel with each other in the front-rear direction so as to extend in the vehicle width direction, the rotary plate (5) and the seat frame (6) are half-rotatable so as to face forward and rearward relative to a vehicle traveling direction, hook members (77) are provided on the rotary plate (5) so as to be positioned at a rear-right portion and a rear-left portion of the seat frame (6), respectively, and a plurality of the first load receiving members (71) are provided at end portions of the pair of the upper rails (4), respectively, so that the rotating seat apparatus (1) for the vehicle includes four first load receiving members (71) in total.

5. The rotating seat apparatus (1) for the vehicle according to any one of Claims 1 to 4 further comprising a front-rear slide mechanism (2) for supporting the lower rail (3) so as to be movable in a front-rear direction of the vehicle, wherein the lower rail (3) is arranged so that a longitudinal direction thereof corresponds to a vehicle width direction, and the first load receiving member (71) is positioned above a supported point (35) of the lower rail (3), which is supported by the front-rear slide mechanism (2).

6. The rotating seat apparatus (1) for the vehicle according to any one of Claims 1 to 5 further comprising a second load receiving member (71), which is provided at the upper rail (4) so as to be orthogonal to the upper rail (4) so that a portion of the second load receiving member (71) upwardly extends therefrom, for restricting a downward movement of the upper rail (4), and a compression-deformation preventing mechanism (8) provided on a lower surface of the rotary plate (5) so as to be positioned at a front portion of the seat frame (6) so as to center on the rotational axis and being engageable with the second load receiving member (71) while allowing the rotary plate (5) to rotate, wherein the detachment load applied to the rotary plate (5) from behind of the seat frame (6) in the upward direction is dispersedly received by the rotary plate lower rail (51) and the first load receiving member (71) and a compression load applied to the rotary plate (5) from front of the seat frame (6) in a downward direction is dispersedly received by the rotary plate lower rail (51) and the second load receiving member (71).

7. The rotating seat apparatus (1) for the vehicle according to Claim 6, wherein the first load receiving member (71) and the second load receiving member (71) are formed so as to have the same configuration and are provided at the upper rail (4) so that the portion of each of the first and second load receiving members upwardly extend in order to restrict the upward movement and the downward movement of the upper rail (4), the hook member (77) and a backing plate member (81) are arranged in a concyclic manner, and positions of the hook member (77), which is engageable with the first load receiving member or the second load receiving member, and the backing plate member (81), which is engageable with the first load receiving member or the second load receiving member, are interchanged with each other in response to the rotation of the rotary plate (5).

8. The rotating seat apparatus (1) for the vehicle according to Claim 6 or Claim 7, wherein the lower rail (3) includes an elongated hole (37) formed so as to extend in a longitudinal direction, the second load receiving member (71), which is provided at the upper rail (4) so as to be orthogonal therewith, downwardly extends so as to be freely inserted into the elongated hole (37), the second load receiving member (71) includes a stepped portion (73), which is integrally formed therewith of separately formed thereof, so as to be contactable with a circumferential end portion of the elongated hole (37) at an upper surface of the lower rail (3), and the second load receiving member (71) dispersedly receives some of the compression load applied to the upper rail (4) via the rotary plate (5).

9. The rotating seat apparatus (1) for the vehicle according to any one of Claims 6 to 8, wherein a pair of the lower rails (3) are provided in parallel with each other in the front-rear direction of the vehicle so that a longitudinal direction of the pair of the lower rails (3) extend in a vehicle width direction, a pair of the upper rails (4) are provided in parallel with each other in the front-rear direction of the vehicle so as to extend in the vehicle width direction, the rotary plate (5) and the seat frame (6) are half-rotatable so as to face forward and rearward in a vehicle traveling direction, hook members (77) are provided on the rotary plate (5) so as to be positioned at a rear-right portion and a rear-left portion of the seat frame (6), respectively, backing plate members (81) are provided on the rotary plate (5) so as to be positioned at a front-right portion and a front-left portion of the seat frame (6), respectively, first load receiving members (71) are provided at both end portions of one of the pair of the upper rails (4), respectively, and second load receiving members (71) are provided at both end portions of the other one of the pair of the upper rails (4), respectively.

10. The rotating seat apparatus (1) for the vehicle according to any one of Claims 6 to 9 further comprising a front-rear slide mechanism (2) for supporting the lower rail (3) so as to be movable in the front-rear direction of the vehicle, wherein the lower rail (3) is arranged so that a longitudinal direction thereof corresponds to the vehicle width direction, and the second load receiving member (71) is provided above a supported point (35) of the lower rail (3), which is supported by the front-rear slide mechanism (2).

11. The rotating seat apparatus (1) for the vehicle according to any one of Claims 7 to 10, wherein the hook member (77) and the backing plate member (81) are arranged at radially outer positions relative to the rotary plate lower rail (51).
